# FASCICULE DE BREVET EUROPEEN

(11) **EP 2 085 583 B1**
(45) Date de publication et mention de la délivrance du brevet: **27.04.2011**
(21) Numéro de dépôt: 09305067.2
(22) Date de dépôt: 26.01.2009
(51) Int. Cl.: F01N 9/00, F01N 11/00

(54) **Dispositif et procédé de diagnostic d'un filtre à particules pour moteur à combustion et d'un capteur de pression associé**
Diagnosevorrichtung und -verfahren eines Partikelfilters für einen Verbrennungsmotor and einen dazu gehörenden Drucksensor
Diagnosis device and method for a combustion engine particle filter and an associated pressure sensor

(30) Priorité: 28.01.2008 FR 0850516
(43) Date de publication de la demande: 05.08.2009
(73) Titulaire: Renault S.A.S., 92100 Boulogne-Billancourt (FR)
(72) Inventeur: Thouvenel, Nicolas, 91610 Ballancourt sur Essonne (FR); Pradeilles, Cyril, 94370 Sucy en Brie (FR)

(56) Documents cités:
- EP-A- 1 582 707
- EP-A- 1 849 972
- FR-A- 2 774 421
- FR-A- 2 829 799
- JP-A- 10 184 343

## Description

L'invention concerne le domaine des dispositifs et les méthodes de diagnostic ou de contrôle d'un groupe motopropulseur, et en particulier d'un organe de traitement des particules des gaz d'échappement du moteur et notamment d'un moteur Diesel pour véhicule automobile.

Certains organes de traitement des particules de gaz d'échappement comprennent un filtre à particules qui retient les particules, et qui est progressivement colmaté par les suies que forment ces particules. Périodiquement, une phase de régénération est nécessaire pour brûler les suies stockées.

Des méthodes de diagnostic mesurent la pression des gaz en amont et en aval du filtre à particules. Il y a un lien direct entre la surpression des gaz en amont du filtre à particules et son degré de colmatage.

Par la demande de brevet WO 01/27447, on connaît un procédé de diagnostic d'un système d'échappement de moteur à combustion. L'état de chargement du filtre à particules est estimé. Une cartographie détermine les particules produites à chaque point de fonctionnement du moteur de type débit/couple, pour une durée de fonctionnement donnée. La différence de pression issue de l'estimation du chargement du filtre à particules est comparée avec la surpression mesurée.

La demande de brevet FR 2 774 421 décrit un autre système de gestion des phases de régénération d'un filtre à particules. Au cours du roulage du véhicule, une unité centrale de traitement d'information compare la pression différentielle aux bornes du filtre avec un seuil d'encrassement, au delà duquel la régénération du filtre est déclenchée. La pression différentielle est ensuite comparée à un second seuil inférieur au premier, pour décider du moment où la régénération est suffisante. L'unité centrale surveille également un éventuel franchissement d'un seuil de colmatage, pour déclencher au besoin une demande de changement du filtre, et surveille si après une certaine distance parcourue, la pression différentielle franchit un seuil de validation laissant supposer que le filtre joue effectivement son rôle collecteur.

La demande de brevet FR 2 829 799 décrit un dispositif de surveillance du signal de contrepression aux bornes d'un filtre à particules. L'encrassement du filtre est détecté si la contrepression franchit un seuil supérieur. On détecte un défaut du capteur si la contrepression reste inférieure à un second seuil minimal.

Un problème se pose lorsque le moteur, pour une raison quelconque, sort de la plage de fonctionnement normal. La différence entre le moyen d'estimation et la valeur mesurée peut n'être pas due au colmatage du filtre à particules. Il peut y avoir des périodes où le diagnostic n'est pas disponible alors que le filtre à particules continue de se charger en particules. Il peut arriver que lorsque le diagnostic est de nouveau possible, l'information renvoyée par le capteur de pression corresponde à un état de saturation du filtre à particules. Le système de contrôle du véhicule ne sait pas dissocier si cet état de saturation est dû à une panne du capteur ou à un remplissage en aveugle du filtre à particules.

L'invention propose un diagnostic pouvant être utilisé en complément d'autres méthodes de diagnostic du remplissage d'un organe de traitement de particules des gaz d'échappement d'un moteur. Le dispositif et la méthode de diagnostic de l'invention permet de différencier un capteur défaillant d'une configuration de saturation due à un organe de traitement trop chargé en suies.

L'invention concerne un dispositif de diagnostic d'un organe de traitement des particules émises par un moteur à combustion interne de véhicule automobile, et d'un capteur de pression associé permettant de déterminer la contre-pression générée lors du passage des gaz d'échappement à travers l'organe de traitement des particules.

Le dispositif de diagnostic comprend un moyen de comparaison de la contre-pression avec un premier et un deuxième seuil de contre-pression, le premier seuil étant supérieur au deuxième seuil de contre-pression. Le dispositif comprend en outre un moyen d'information sur l'état de l'organe de traitement ou du capteur de pression lorsque la contre-pression est supérieure au premier seuil.

Dans un tel dispositif, lorsque la contre-pression est supérieure au premier seuil, on dispose également de l'information concernant le franchissement du deuxième seuil. Si les deux seuils sont franchis progressivement l'un après l'autre, cela peut correspondre à une situation de colmatage progressif de l'organe de traitement des particules. Si les franchissements des deux seuils sont trop rapprochés temporellement l'un de l'autre, il est plus probable que la situation détectée corresponde à un capteur défaillant. Le fait de disposer des deux informations de franchissement de seuils de la contre-pression permet de différencier un capteur défaillant d'une configuration de saturation.

Un tel diagnostic peut fonctionner de manière permanente, même lorsque le moteur sort de la plage de fonctionnement normal. Cela permet de continuer à donner une information sur l'organe de traitement des particules même lorsque les cartographies sont temporairement inutilisables.

Selon l'invention, le dispositif de diagnostic comprend un moyen de retard de manière à comparer l'instant où la contre-pression franchit le premier seuil avec un instant retardé de franchissement du deuxième seuil. Le moyen de retard permet d'apprécier la proximité temporelle des franchissements des deux seuils.

Selon une variante, le dispositif de diagnostic comprend un premier dispositif de temporisation d'une première durée déclenché lorsque la contre-pression devient supérieure au premier seuil, le moyen de comparaison étant apte à émettre un premier signal lorsque la contre-pression continue à être supérieure au premier seuil durant au moins la première durée.

Le fait qu'un franchissement de seuil ne soit pris en compte que lorsque la contre-pression mesurée persiste à être au dessus du premier seuil, permet d'éliminer du diagnostic des situations erratiques d'un franchissement ponctuel du seuil. Cela élimine du diagnostic des phénomènes transitoires, issus par exemple d'ondes de choc dans l'organe de traitement. Le dispositif de diagnostic permet de différencier des causes de signaux de saturation parmi celles qui sont durablement installées.

Avantageusement, le dispositif de diagnostic comprend un deuxième dispositif de temporisation d'une deuxième durée, déclenché lorsque la contre-pression devient supérieure au deuxième seuil, le moyen de comparaison étant apte à émettre un deuxième signal au bout de la deuxième durée, la deuxième durée étant plus longue que la première durée. Le fait que la deuxième temporisation soit plus longue que la première temporisation permet d'évaluer la progressivité avec laquelle les deux seuils sont successivement franchis par la contre-pression mesurée.

Selon l'invention, le moyen d'information est activé lorsque les premier et deuxième signaux ont été émis, l'information concernant l'état de l'organe de traitement lorsque le deuxième signal précède le premier signal, et l'état du capteur de contre-pression dans le cas contraire.

Certaines défaillances de capteur peuvent être instantanées et provoquer soudainement l'émission d'un signal correspondant à une pression supérieure au premier seuil. Dans ce cas, le franchissement des deux seuils de contre-pression est perçu comme simultané. A cause des temporisations, le deuxième signal arrive après le premier signal. La défaillance est ainsi détectée.

Le dispositif permet également de diagnostiquer un type de défaillance de capteur dans laquelle la dégradation est progressive tout en étant plus rapide que le colmatage d'un filtre à particules.

Le dispositif permet aussi de diagnostiquer un type de défaillance erratique du capteur. Si le deuxième seuil et/ou le premier seuil sont franchis ponctuellement, le deuxième signal se déclenche. Le premier signal ne se déclenche que lorsque la panne est établie et que la contre-pression continue d'être supérieure au premier seuil durant la première durée. Le deuxième signal précède le premier signal et le dispositif de diagnostic détecte cette situation. Les évolutions transitoires de la contre-pression ne sont prises en compte que lorsqu'elles atteignent le deuxième seuil.

Si l'on souhaite ne pas détecter ces situations, il est également possible que le deuxième moyen de comparaison n'émette le deuxième signal que lorsque la contre-pression continue d'être supérieure au deuxième signal durant au moins la deuxième durée.

Selon une variante, le capteur de pression est apte à déterminer au moins la pression relative desdits gaz d'échappement par rapport à la pression atmosphérique, ou la pression absolue desdits gaz, ou la pression différentielle desdits gaz par rapport à la pression en aval de l'organe de traitement des particules.

Selon un autre aspect, l'invention porte également sur un procédé de diagnostic d'un organe de traitement des particules émises par un moteur à combustion interne de véhicule automobile et d'un capteur de pression associé selon les caractéristiques de la revendication 3.

D'autres caractéristiques et avantages de l'invention apparaîtront à la lecture de la description détaillée d'un mode de réalisation pris à titre d'exemple non limitatif et illustré par le dessin annexé, selon lequel :
- la figure 1 représente une ligne d'échappement d'un moteur à combustion interne équipé du dispositif de diagnostic ;
- la figure 2 est un schéma illustrant l'évolution des signaux émis par le capteur de pression et les moyens automobile, comprend un moyen de détermination de la pression des gaz d'échappement en amont de l'organe de traitement des particules. Il comprend un moyen de comparaison de la pression avec un seuil de saturation et un moyen de comparaison à un seuil de progressivité de la pente temporelle que présente ladite pression en atteignant le seuil de saturation.

Avantageusement, le moyen de comparaison de la pente de pression comprend un moyen de comparaison de la pression à un seuil de colmatage, inférieur au seuil de saturation et apte à émettre un signal de colmatage, et comprenant en outre un moyen de temporisation du signal de colmatage.

Selon un autre aspect, l'invention porte également sur un procédé de diagnostic d'un organe de traitement des particules émises par un moteur à combustion interne de véhicule automobile dans lequel on mesure une contre-pression générée par le passage des gaz d'échappement dans l'organe de traitement des particules. On compare la contre-pression mesurée à deux seuils de pression différents. Si la pression est supérieure au seuil le plus élevé, on regarde si la contre-pression est restée entre les deux seuils de contre-pression pendant une durée supérieure ou égale à un seuil de durée. Si les deux dernières conditions sont vérifiées, on diagnostique un état de chargement critique en suies de l'organe de traitement. Dans le cas où la pression est supérieure au seuil le plus élevé (ΔP1) mais où la seconde condition n'est pas vérifiée, on diagnostique une défaillance du capteur de pression.

Avantageusement, l'information concerne l'état de l'organe de traitement des particules lorsque la contre-pression est restée entre les deux seuils de contre-pression pendant une durée supérieure ou égale à un seuil de durée, et concerne le capteur de pression dans le cas contraire.

D'autres caractéristiques et avantages de l'invention apparaîtront à la lecture de la description détaillée d'un mode de réalisation pris à titre d'exemple non limitatif et illustré par le dessin annexé, selon lequel :

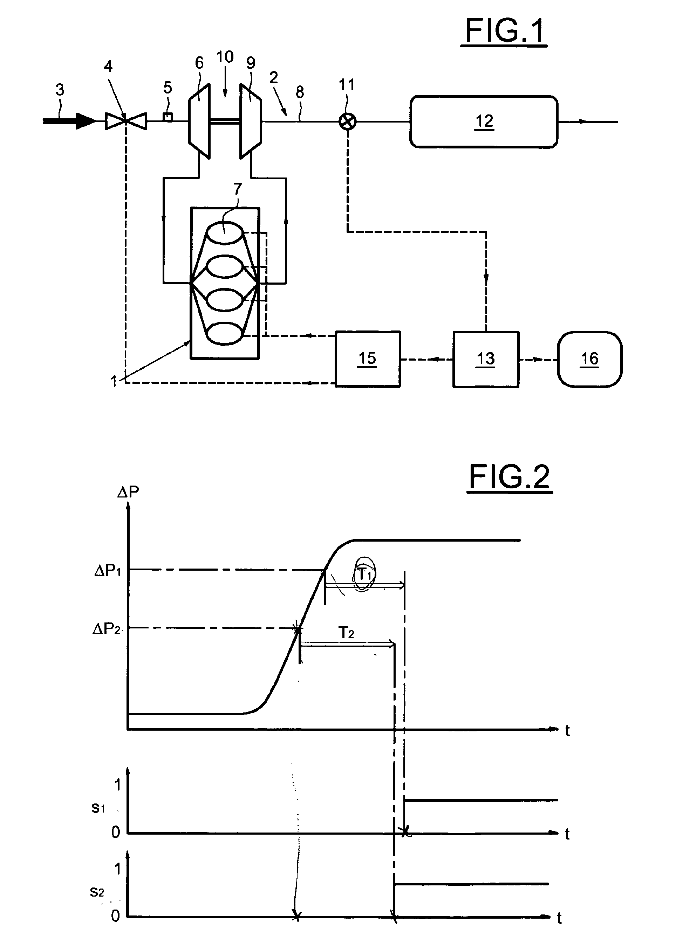

- la figure 1 représente une ligne d'échappement d'un moteur à combustion interne équipé du dispositif de diagnostic ;
- la figure 2 est un schéma illustrant l'évolution des signaux émis par le capteur de pression et les moyens défaillance du capteur 11. Le premier et/ou le deuxième seuil de pression sont à la disposition du calculateur 13 en étant par exemple mémorisés dans des mémoires du calculateur 13 ou en étant fournis par une interface d'entrée du calculateur 13.

Le capteur de pression 11 est apte à déterminer une contre-pression ΔP générée lors du passage des gaz d'échappement à travers le filtre à particules 12. Le capteur de pression 11 peut par exemple mesurer la pression différentielle des -gaz -d'échappement 8 entre l'entrée et la sortie du filtre à particules 12. De manière alternative, le capteur de pression 11 peut mesurer la pression relative des gaz d'échappement 8 en amont du filtre à particules 12 par rapport à la pression atmosphérique extérieure. L'emplacement du capteur de pression 11 peut être immédiatement en amont du filtre à particules 12 ou bien en amont d'un organe de traitement des particules qui comprend un filtre à particules 12. Il n'est pas indispensable que le capteur de pression 11 soit immédiatement en amont du filtre à particules 12 dès lors que le signal émis par le capteur 11 est représentatif du degré de colmatage du filtre à particules 12 ou d'un organe de traitement des particules en général.

Le calculateur 13 comprend un moyen de comparaison de la contre-pression mesurée ΔP par rapport au premier seuil de pression ΔP1 et par rapport au deuxième seuil de pression ΔP2. Un signal S1 est activé lorsque la contre-pression ΔP continue d'être au dessus du premier seuil de pression ΔP1 pendant une première durée T1. Un deuxième signal S2 est activé au bout d'une deuxième durée T2 après que la contre-pression ΔP ait été détectée supérieure au deuxième seuil de pression ΔP2. Il est aussi possible que le signal S2 soit activé lorsque la contre-pression mesurée ΔP soit détectée supérieure au deuxième seuil ΔP2 durant au moins la deuxième durée T2.

Les durées T1 et T2 sont réglées par des dispositifs de temporisation et sont telles que la deuxième durée T2 est plus longue que la première durée T1.

Lorsque l'évolution de la contre-pression mesurée ΔP correspond à une situation de colmatage progressif du filtre à particules 12, la contre-pression ΔP augmente progressivement. Si le deuxième signal S2 est activé avant le premier signal S1, cela implique que la contre-pression ΔP a franchi le premier seuil ΔP1 avec un retard minimum par rapport au franchissement du deuxième seuil Δ2. Ce retard minimum correspond à la différence entre la deuxième durée T2 diminuée de la première durée T1. Autrement dit, la contre-pression ΔP présente une progressivité moyenne entre le franchissement du deuxième seuil ΔP2 et le franchissement du premier seuil ΔP1 présentant une pente maximale. Cela est représentatif d'une vitesse d'encrassement maximale du filtre à particules 12.

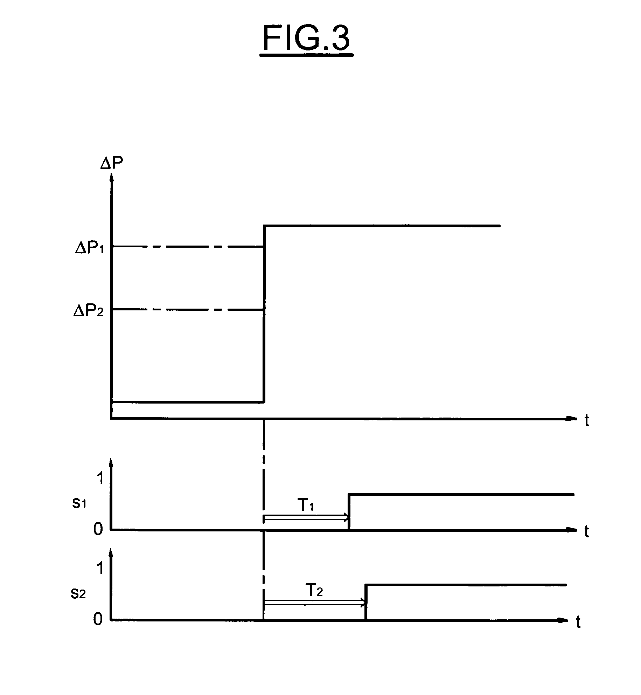

Comme illustré en figure 3, le signal ΔP émis par un capteur de pression 11 soudainement défaillant passe brutalement à une valeur au dessus des premier et deuxième seuils ΔP1 et ΔP2. Dans cette situation, l'activation du premier signal S1 précède l'activation du deuxième signal S2.

D'une manière générale, le fait de comparer lequel des deux signaux S1 ou S2 précède l'autre permet de déterminer si la progressivité de la contre-pression mesurée ΔP est au dessus ou pas d'un seuil. Si la pente de progression de la contre-pression ΔP est plus rapide que ce qui peut correspondre à un encrassement maximum du filtre à particules 12, le dispositif de diagnostic identifie que l'évolution de la contre-pression mesurée n'est pas due au colmatage du filtre à particules 12, mais vient probablement d'une panne du capteur de pression 11.

En situation normale, le système de régénération 15 intervient sur le filtre à particules 12 avant que la contre-pression ΔP mesurée n'ait atteint le premier seuil de pression ΔP1. La situation où le filtre à particules 12 se colmate du delà du seuil de pression ΔP1, correspond à une situation anormale où des cartographies permettant de piloter le système de régénération 15 ont été temporairement inutilisables. Le dispositif de diagnostic permet de dissocier deux types de situation anormale, celle où une simple régénération permet de restaurer le système, et celle où une maintenance du capteur 11 est nécessaire.

## Revendications

1. Dispositif de diagnostic d'un organe (12) de traitement des particules émises par un moteur (1) à combustion interne de véhicule automobile et d'un capteur de pression (11) associé permettant de déterminer la contre-pression (ΔP) générée lors du passage des gaz d'échappement (8) à travers l'organe (12) de traitement des particules, ledit dispositif comprenant un moyen de comparaison de la contre-pression (ΔP) avec un premier et un deuxième seuils de contre-pression (ΔP1, ΔP2), le premier seuil (ΔP1) étant supérieur au deuxième seuil (ΔP2) de contre-pression, ledit dispositif comprenant en outre un moyen d'information sur l'état de l'organe de traitement (12) ou du capteur de pression (11) lorsque la contre-pression est supérieure au premier seuil (ΔP1), **caractérisé en ce que** le dispositif comprend
- un premier dispositif de temporisation d'une première durée (T1) déclenché lorsque la contre-pression (ΔP) devient supérieure au premier seuil (ΔP1), le moyen de comparaison étant apte à émettre un premier signal (S1) lorsque la contre-pression (ΔP) continue à être supérieure au premier seuil (ΔP1) durant au moins la première durée (T1),
- un deuxième dispositif de temporisation d'une deuxième durée (T2), déclenché lorsque la contre-pression (ΔP) devient supérieure au deuxième seuil (ΔP2), le moyen de comparaison étant apte à émettre un deuxième signal (S2) au bout de la deuxième durée (T2), la deuxième durée (T2) étant plus longue que la première durée (T1),
- ledit moyen d'information étant activé lorsque les premier et deuxième signaux ont été émis, l'information concernant le colmatage de l'organe de traitement (12) lorsque le deuxième signal (S2) précède le premier signal (S1), et la défaillance du capteur de pression (11) dans le cas contraire.

2. Dispositif selon l'une des revendications précédentes, dans lequel le capteur de pression (11) est apte à déterminer au moins la pression relative desdits gaz d'échappement (8) par rapport à la pression atmosphérique, ou la pression absolue desdits gaz, ou la pression différentielle desdits gaz par rapport à la pression en aval de l'organe de traitement des particules (12).

3. Procédé de diagnostic d'un organe de traitement des particules émises par un moteur (1) à combustion interne de véhicule automobile et d'un capteur de pression associé, dans lequel on mesure une contre-pression (ΔP) générée par le passage des gaz d'échappement (8) dans l'organe de traitement des particules (12), dans lequel on compare la contre-pression mesurée (ΔP) à deux seuils de pression différents (ΔP1, ΔP2), et dans lequel, si la pression est supérieure au seuil le plus élevé (ΔP1), on regarde si la contre-pression (ΔP) est restée entre les deux seuils (ΔP1, ΔP2) de contre-pression pendant une durée supérieure ou égale à un seuil de durée, et si les deux dernières conditions sont vérifiées, on diagnostique un état de chargement critique en suies de l'organe de traitement(12), alors que dans le cas où la pression est supérieure au seuil le plus élevé (ΔP1) mais où la seconde condition n'est pas vérifiée, on diagnostique une défaillance du capteur de pression (11).

## Claims

1. Device for diagnosing a member (12) for treating particulates emitted by an internal combustion engine (1) of a motor vehicle and an associated pressure sensor (11) making it possible to determine the back-pressure (ΔP) generated when the exhaust gases (8) pass through the particulate treatment member (12), said device comprising a means of comparing the back-pressure (ΔP) with a first and a second back-pressure threshold (ΔP1, ΔP2), the first threshold (ΔP1) being greater than the second back-pressure threshold (ΔP2), said device also comprising a means of providing information on the state of the treatment member (12) or of the pressure sensor (11) when the back-pressure is greater than the first threshold (ΔP1), **characterized in that** the device comprises
- a first timer device of a first duration (T1) triggered when the back-pressure (ΔP) becomes greater than the first threshold (ΔP1), the comparison means being able to emit a first signal (S1) when the back-pressure (ΔP) continues to be greater than the first threshold (ΔP1) for at least the first duration (T2),
- a second timer device of a second duration (T2), triggered when the back-pressure (ΔP) becomes greater than the second threshold (ΔP2), the comparison means being able to emit a second signal (S2) at the end of the second duration (T2), the second duration (T2) being longer than the first duration (T1),
- said information means being activated when the first and second signals have been emitted, the information concerning the clogging of the treatment member (12) when the second signal (S2) precedes the first signal (S1), and the failure of the pressure sensor (11) otherwise.

2. Device according to the preceding claim, in which the pressure sensor (11) is able to determine at least the relative pressure of said exhaust gases (8) relative to the atmospheric pressure, or the absolute pressure of said gases, or the differential pressure of said gases relative to the pressure downstream of the particulate treatment member (12).

3. Method for diagnosing a member for treating particulates emitted by an internal combustion engine (1) of a motor vehicle and an associated pressure sensor, in which a back-pressure (ΔP) generated by the passage of the exhaust gases (8) into the particulate treatment member (12) is measured, in which the measured back-pressure (ΔP) is compared to two different pressure thresholds (ΔP1, (ΔP2), and in which, if the pressure is greater than the higher threshold (ΔP1), a check is carried out to see if the back-pressure (ΔP) has remained between the two back-pressure thresholds (ΔP1, ΔP2) for a duration greater than or equal to a duration threshold, and if the last two conditions are satisfied, a state of critical charging of the treatment member (12) with soot is diagnosed, whereas, in the case where the pressure is greater than the higher threshold (ΔP1) but where the second condition is not satisfied, a failure of the pressure sensor (11) is diagnosed.

## Patentansprüche

1. Vorrichtung zur Diagnose eines Organs (12) zur Behandlung der von einem Verbrennungsmotor (1) eines Kraftfahrzeugs emittierten Partikel und eines zugeordneten Drucksensors (11), die es ermöglicht, den beim Durchgang der Abgase (8) durch das Organ (12) zur Behandlung der Partikel erzeugten Gegendruck (ΔP) zu bestimmen, wobei die Vorrichtung eine Einrichtung zum Vergleich des Gegendrucks (ΔP) mit einem ersten und einem zweiten Gegendruck-Schwellwert (ΔP1, ΔP2) enthält, wobei der erste Schwellwert (ΔP1) höher als der zweite Gegendruck-Schwellwert (ΔP2) ist, wobei die Vorrichtung außerdem eine Einrichtung zur Information über den Zustand des Behandlungsorgans (12) oder des Drucksensors (11) enthält, wenn der Gegendruck höher als der erste Schwellwert (ΔP1) ist, **dadurch gekennzeichnet, dass** die Vorrichtung enthält
- eine erste Vorrichtung zur Verzögerung um eine erste Dauer (T1), die ausgelöst wird, wenn der Gegendruck (ΔP) höher wird als der erste Schwellwert (ΔP1), wobei die Vergleichseinrichtung ein erstes Signal (S1) senden kann, wenn der Gegendruck (ΔP) während mindestens der ersten Dauer (T1) weiterhin höher als der erste Schwellwert (ΔP1) ist,
- eine zweite Vorrichtung zur Verzögerung um eine zweite Dauer (T2), die ausgelöst wird, wenn der Gegendruck (ΔP) höher wird als der zweite Schwellwert (ΔP2), wobei die Vergleichseinrichtung ein zweites Signal (S2) am Ende der zweiten Dauer (T2) senden kann, wobei die zweite Dauer (T2) länger ist als die erste Dauer (T1),
- wobei die Informationseinrichtung aktiviert wird, wenn das erste und das zweite Signal gesendet wurden, wobei die Information die Verstopfung des Behandlungsorgans (12), wenn das zweite Signal (S2) vor dem ersten Signal (S1) liegt, und im gegenteiligen Fall den Ausfall des Drucksensors (11) betrifft.

2. Vorrichtung nach dem vorhergehenden Anspruch, bei der der Drucksensor (11) mindestens den relativen Druck der Abgase (8) bezüglich des Atmosphärendrucks oder den Absolutdruck der Gase, oder den differentiellen Druck der Gase bezüglich des Drucks hinter dem Behandlungsorgan (12) der Partikel bestimmen kann.

3. Verfahren zur Diagnose eines Organs zur Behandlung der von einem Verbrennungsmotor (1) eines Kraftfahrzeugs emittierten Partikel und eines zugeordneten Drucksensors, bei dem ein durch den Durchgang der Abgase (8) durch das Organ (12) zur Behandlung der Partikel erzeugter Gegendruck (ΔP) gemessen wird, bei dem der gemessene Gegendruck (ΔP) mit zwei unterschiedlichen Gegendruck-Schwellwerten (ΔP1 AP2) verglichen wird, und bei dem, wenn der Druck höher ist als der höchste Schwellwert (ΔP1), überprüft wird, ob der Gegendruck (ΔP) während einer Dauer höher als ein oder gleich einem Dauer-Schwellwert zwischen den zwei Gegendruck-Schwellwerten (ΔP1, ΔP2) geblieben ist, und wenn die zwei letzteren Bedingungen erfüllt sind, ein kritischer Zustand der Rußbelastung des Behandlungsorgans (12) diagnostiziert wird, während in dem Fall, in dem der Druck höher als der höchste Schwellwert (ΔP1) ist, aber die zweite Bedingung nicht erfüllt ist, ein Ausfall des Drucksensors (11) diagnostiziert wird.
